(19) Europäisches Patentamt
European Patent Office
Office européen des brevets

(11) Publication number: 0 001 328
A1

(12) # EUROPEAN PATENT APPLICATION

(21) Application number: 78300313.0

(22) Date of filing: 22.08.78

(51) Int. Cl.$^2$: A 01 N 9/02
C 07 C 59/25

(30) Priority: 23.09.77 GB 39647/77

(43) Date of publication of application:
04.04.79 Bulletin 79/7

(84) Designated contracting states:
BE CH DE FR GB LU NL SE

(71) Applicant: FISONS LIMITED
Fison House 9 Grosvenor Street
London(GB)

(72) Inventor: Ayres, Robert John
9 Greenfield Close
Stapleford Cambridgeshire(GB)

(74) Representative: Murphy, Finnbarr
Fisons Limited Fison House Princes Street
Ipswich 1P1 1QH(GB)

(54) **Method and composition for combating weeds.**

(57) Weeds are combated, for example in cereal crops, by applying:
(a) a diphenyl ether herbicide; and
(b) dichlorprop or mecoprop.

EP 0 001 328 A1

Croydon Printing Company Ltd.

Method and Composition for Combating Weeds

This invention relates to combating weeds.

Accordingly, the invention provides a method of combating weeds at a locus infested or liable to be infested with them, which method comprises applying to the locus:

(a) a diphenyl ether herbicide; and

(b) at least one of dichlorprop and mecoprop.

The invention provides also a herbicidal composition comprising (a) and (b).

It has been found that the present combination of herbicides has a surprisingly good combination of safety to crops and activity against weeds. It is active against a wide spectrum of weeds e.g. in cereal crops. Particularly surprising, however, is its high level of safety to crops, e.g. cereal crops.

Component (a) is a herbicide having the structure

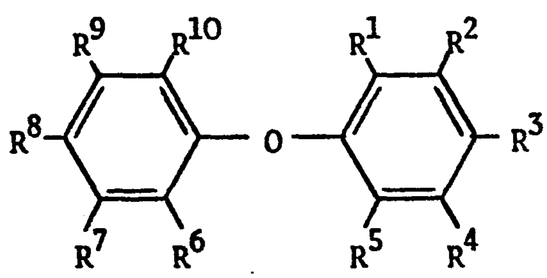

in which $R^1$, $R^2$, $R^3$, $R^4$, $R^5$, $R^6$, $R^7$, $R^8$, $R^9$ and $R^{10}$ are the same or different and each represents hydrogen or a substituent.

Preferably $R^1$, $R^2$, $R^3$, $R^4$, $R^5$, $R^6$, $R^7$, $R^8$, $R^9$ and $R^{10}$ are the same or different and each represents hydrogen, halogen (e.g. chlorine), alkoxycarbonyl of 2-7 carbon atoms (e.g. methoxycarbonyl), nitro, alkoxy of 1-6 carbon atoms (e.g. methoxy), $-NH\overset{O}{C}NMe_2$, $-O.CHMe\overset{O}{C}OR^{11}$ where $R^{11}$ represents alkyl of 1-4 carbon atoms (e.g. methyl or isobutyl) or trifluoromethyl.

In a particular embodiment,

$R^1$ represents hydrogen;

$R^2$ represents hydrogen;

$R^3$ represents nitro, $-NH\overset{O}{C}NMe_2$, or $-O.CHMe\overset{O}{C}OR^{11}$ where $R^{11}$ represents alkyl of 1-4 carbon atoms;

$R^4$ represents alkoxycarbonyl of 2-7 carbon atoms, or alkoxy of 1-6 carbon atoms;

$R^5$ represents hydrogen;

$R^6$ represents hydrogen, halogen, or nitro (e.g. halogen or nitro);

$R^7$ represents hydrogen;

$R^8$ represents halogen, alkoxy of 1-6 carbon atoms, or trifluoromethyl;

$R^9$ represents hydrogen; and

$R^{10}$ represents hydrogen.

Component (a) may be selected for instance from the group consisting of bifenox (methyl 5-(2,4-dichlorophenoxy)-2-nitrobenzoate), chlomethoxynil (4-(2,4-dichlorophenoxy)-2-methoxy-1-nitrobenzene), chloroxuron [3-(4-[4-chlorophenoxy]-phenyl)-1,1-dimethylurea], difenoxuron [3-(4-[4-methoxyphenoxy]phenyl)-1,1-dimethylurea], clofop-isobutyl [isobutyl (±)-2-[4-(4-chlorophenoxy)phenoxy]propionate], diclofop-methyl [methyl (±)-2-[4-(2,4-dichlorophenoxy)phenoxy]propionate], fluorodifen

[2-nitro-1-(4-nitrophenoxy)-4-trifluoromethylbenzene], and nitrofen [2,4-dichloro-1-(4-nitrophenoxy)benzene].

Component (b) is dichlorprop [(±)-2-(2,4-dichlorophenoxy) propionic acid or a salt or ester thereof] and/or mecoprop [2-(4-chloro-2-methylphenoxy)propanoic acid or a salt or ester thereof].

Component (a) may be a mixture of diphenyl ether herbicides. Component (b) may be a mixture of dichlorprop and mecoprop, though this is not preferred.

Where a herbicide, e.g. dichlorprop, is normally available commercially as a racemate even though only one isomer is herbicidally active, it may be used as the racemate or just the active isomer in the present invention. Rates and proportions in such a case given in this specification refer, as is usual, to amounts of racemate; where the racemate is not employed, corresponding rates and proportions can readily be calculated.

Component (b) can be employed, as is usual, in the form of a salt or functional derivative of its acid. The salt may be for instance an alkali metal salt, e.g. a sodium or potassium salt, or an amine salt, e.g. an ammonium, ethanolamine, diethanolamine, triethanolamine, allylamine, benzylamine, butylamine, dibutylamine, tributylamine, cyclohexylamine, ethylamine, methylamine, morpholine or piperidine salt. The functional derivative is generally an ester. The ester may be for instance an alkyl of 1-6 carbon atom ester e.g. methyl,

ethyl, or isopropyl ester. Where rates and proportions are given in this specification for component (b), they refer, as is conventional, to equivalent amounts of acid.

In a preferred embodiment, component (a) is bifenox.

The proportions of component (a) to component (b) can vary over a wide range, depending for instance on the particular components and use employed. Each component is usually employed as 1-100 parts. Parts, proportions and percentages in this specification are by weight unless otherwise indicated. Generally the proportions of component (a), e.g. bifenox, to component (b) are from 1:15 to 15:1, e.g. from 1:4 to 4:1, though in the case of particularly active (a) components their amount may be less, e.g. from 1:70 to 15:1 for instance from 1:70 to 1:4. Usually there is only a single (a) component.

The essential herbicides are preferably applied together in a composition comprising (a) and (b). Usually the compositions are initially produced in the form of concentrates, e.g. containing 0.5-85% *in toto* of (a) and (b), and these concentrates are diluted with water or hydrocarbon, usually water, for application, generally such that the concentration *in toto* of (a) and (b) is 0.05-5%, though in ultra low volume application the concentration may be higher, e.g. up to 20%. Thus, the present compositions usually contain 0.05-85% *in toto* of (a) and (b).

The compositions normally contain a surface active agent

and/or a carrier.

The carrier may be a liquid, e.g. water (e.g. water used to dilute a concentrate for application). If water is employed as carrier in a concentrate, an organic solvent may also be present as carrier, though this is not usually employed. A surface active agent may advantageously be present.

The carrier may be a liquid other than water, for example an organic solvent, such as a water immiscible solvent, e.g. a hydrocarbon which boils within the range 130-270$^{o}$C, in which (a) and (b) are dissolved or suspended. A concentrate containing a water immiscible solvent suitably also contains a surface active agent so that the concentrate acts as a self-emulsifiable oil on admixture with water.

The carrier may be a solid, which may be finely divided. Examples of suitable solids are limestone, clays, sand, mica, chalk, attapulgite, diatomite, perlite, sepiolite, silicas, silicates, lignosulphonates, peat and solid fertilizers. The carrier can be of natural or synthetic origin or can be a modified natural material.

Wettable powders soluble or dispersable in water may be formed by admixing (a) and (b) in particulate form with a particulate carrier or spraying molten compound on to the particulate carrier, admixing a wetting agent and a dispersing agent and finely grinding the whole powder mixture.

An aerosol composition may be formed by admixing (a) and

(b) with a propellant e.g. a polyhalogenated alkane such as dichlorodifluoromethane, and suitably also with a solvent.

A flowable suspension concentrate may be formed by grinding (a) and (b) with water, a wetting agent and a suspending agent.

A flowable suspension concentrate wherein the carrier is a hydrocarbon which boils within the range 130-270$^{o}$C rather than water may be formed.

Thus the present comosition can for example be solid (e.g. dust or granules) and contain a solid carrier or liquid (e.g. an emulsifiable concentrate) and contain a liquid carrier which is a hydrocarbon which boils within the range 130-270$^{o}$C.

The term 'surface active agent' is used in the broad sense to include materials variously called emulsifying agents, dispersing agents and wetting agents. Such agents are well known in the art.

The surface active agents used may comprise anionic surface active agents, for example mono- or di-esters of phosphoric acid with fatty alcohol ethoxylates or salts of such esters, fatty alcohol sulphates such as sodium dodecyl sulphate, ethoxylated fatty alcohol sulphates, ethoxylated alkylphenol sulphates, lignin sulphonates, petroleum sulphonates, alkyl-aryl sulphonates such as alkyl-benzene sulphonates or lower alkyl-naphthalene sulphonates, salts of sulphonated naphthalene-formaldehyde condensates, salts of sulphonated phenol-formaldehyde condensates, or more complex sulphonates such as the amide

sulphonates e.g. the sulphonated condensation product of oleic acid and N-methyl taurine or the dialkyl sulphosuccinates e.g. the sodium sulphonate of dioctyl succinate.

The surface active agents may also comprise non-ionic agents, for example condensation products of fatty acid esters, fatty alcohols, fatty acid amides or alkyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quarternary ammonium compounds such as cetyl trimethylammonium bromide, or ethoxylated tertiary fatty amines.

Preferred surface active agents include ethoxylated fatty alcohol sulphates, lignin sulphonates, alkyl-aryl sulphonates, salts of sulphonated naphthalene-formaldehyde condensates, salts of sulphonated phenol-formaldehyde condensates, sodium oleoyl N-methyltauride, dialkyl sulphosuccinates, alkyl phenol ethoxylates, and fatty alkyl ethoxylates.

(a) and (b) may be in admixture with a non-phytotoxic oil or with an antidote (a substance having the property of improving the selectivity of herbicides). The non-phytotoxic oil can be

for instance Pyzol 11E, Agri-Oil Plus or Sun Oil 11E. The antidote may be for instance N,N-diallyl-2,2-dichloroacetamide or 1,8-naphthalic anhydride.

(a) and (b) may be in admixture with ammonium sulphate which improves the activity of some herbicides.

(a) and (b) may be in admixture with fertilizers.

(a) and (b) can be mixed together immediately before use. Desirably, however, they would already have been mixed.

The invention provides a one pack presentation, in which (a) and (b) are already mixed, and also a single package adapted to hold (a) and (b) in separate containers, for sequential use or for mixing, e.g. in a spray tank, for application.

Instead of applying (a) and (b) together in a composition such as is discussed above, they can be applied separately in analogous compositions containing just (a) or (b), particularly as the whole or a part of a chemical weed control programme in a crop season. For instance, (b) may be applied before (a), e.g. 1-3 days before (a).

(a) and (b) can be applied for total herbicidal action, but preferably the invention is employed for selective herbicidal action in a crop. The crop is preferably a cereal crop, e.g. wheat, barley, corn, maize, or rice, or sorghum, and especially winter wheat or spring barley, particularly spring barley.

The present composition and method may be employed

pre-emergence of the crop, though preferably they are employed post-emergence of the crop.

A further pesticide can be employed with (a) and (b). The further pesticide can be for instance a herbicide, insecticide or fungicide, particularly another herbicide, e.g. isoproturon [3-(4-isopropylphenyl)-1,1-dimethylurea] or bentazone [3-(1-methylethyl)-(1H)-2,1,3-benzothiadiazin-4(3H)-one 2,2-dioxide]. The further pesticide is particularly one known for use on cereal crops. A composition comprising a mixture of (a), (b) and the further pesticide can be applied. Alternatively, (a) and (b) can be applied separately with the further pesticide admixed with (a) or (b). Usually the proportions of (b) to the further pesticide are from 1:10 to 10:1.

Plants, the soil, land or aquatic areas can be treated by the present method. The method is preferably employed for selectively combating weeds at a locus at which a crop is growing or, less preferably, is to grow.

In the present method, usually 0.1-8 kg, preferably 0.5-4 kg, in toto of (a) and (b) are applied per hectare.

The invention is illustrated by the following Examples.

Examples 1&2

In a series of comparative tests, bifenox was applied in the field alone or in admixture with mecoprop to plots of spring barley (variety Maris Mink) at growth stage 14-22 on the Zadoks

scale. Phytotoxicity to the crop and weed control were assessed in comparison with untreated control plots.

The bifenox was employed as a 21% emulsifiable concentrate and the mecoprop as a solution of the potassium salt in water. In each case the concentrate or concentrates were admixed with water and applied by spraying in the conventional way.

The results are shown below:

| Example | Treatment | Dose, kg active ingred-ient/ha | % Phytoto-xicity to crop Scorch/ necrosis | % Weed Control (3 replicates) | | | | |
|---|---|---|---|---|---|---|---|---|
| | | | | Cleavers | Redshank | Chickweed | Black Bindweed | Charlock |
| 1 | Bifenox | 0.5 | 17 | 68 | 91 | 19 | 99 | 100 |
| 2 | Bifenox + Mecoprop | 0.5 ) 0.5 ) | 11 | 99 | 84 | 68 | 99 | 100 |

It can be seen that the addition of mecoprop to the diphenyl ether herbicide not only results in much better weed control, particularly of chickweed and cleavers, but remarkably results in greater safety to the crop than does the use of the same amount of the diphenyl ether herbicide as is employed in the mixture but used alone.

CLAIMS

1. A method of combating weeds at a locus infested or liable to be infested with them, which method comprises applying to the locus:

(a) a diphenyl ether herbicide; and

(b) at least one of dichlorprop and mecoprop.

2. A method according to claim 1, wherein the weight proportions of (a) to (b) are from 1:70 to 15:1.

3. A method according to claim 1 or 2, wherein (a) is a herbicide having the structure

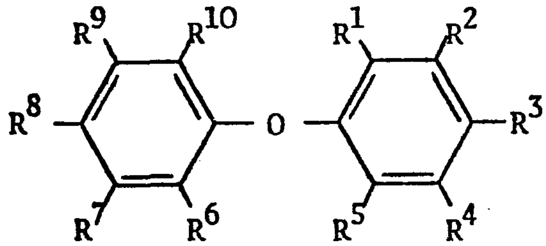

wherein $R^1$, $R^2$, $R^3$, $R^4$, $R^5$, $R^6$, $R^7$, $R^8$, $R^9$ and $R^{10}$ are the same or different and each represents hydrogen, halogen, alkoxycarbonyl of 2-7 carbon atoms, nitro, alkoxy of 1-6 carbon atoms, $-NH\overset{O}{C}NMe_2$, $-O.CHMe\overset{O}{C}OR^{11}$ where $R^{11}$ represents alkyl of 1-4 carbon atoms, or trifluoromethyl.

4. A method according to claim 3, wherein $R^1$, $R^2$, $R^5$, $R^7$, $R^9$ and $R^{10}$ each represent hydrogen;

$R^3$ represents nitro, $-NH\overset{O}{C}NMe_2$, or $-O.CHMe\overset{O}{C}OR^{11}$ where $R^{11}$ represents alkyl of 1-4 carbon atoms;

$R^4$ represents alkoxycarbonyl of 2-7 carbon atoms, or alkoxy

of 1-6 carbon atoms;

$R^6$ represents hydrogen, halogen, or nitro; and

$R^8$ represents halogen, alkoxy of 1-6 carbon atoms, or trifluoromethyl.

5. A method according to claim 4, wherein (a) is bifenox.

6. A method according to any one of the preceding claims, wherein (a) and (b) are applied together in a composition.

7. A method according to any one of the preceding claims, wherein weeds are combated in a cereal crop.

8. A herbicidal composition comprising

(a) a diphenyl ether herbicide; and

(b) at least one of dichlorprop and mecoprop.

9. A composition according to claim 8, wherein the weight proportions of (a) to (b) are from 1:70 to 15:1.

10. A composition according to claim 8 or 9, wherein (a) is a herbicide having the structure

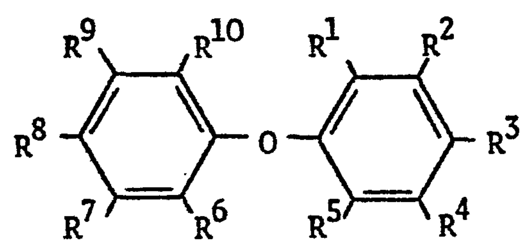

wherein $R^1$, $R^2$, $R^3$, $R^4$, $R^5$, $R^6$, $R^7$, $R^8$, $R^9$ and $R^{10}$ are the same or different and each represents hydrogen, halogen, alkoxycarbonyl of 2-7 carbon atoms, nitro, alkoxy of 1-6 carbon atoms, $-NH\overset{O}{\overset{\|}{C}}NMe_2$, $-O.CHMe\overset{O}{\overset{\|}{C}}OR^{11}$ where $R^{11}$ represents alkyl of 1-4 carbon atoms, or trifluoromethyl.

11. A composition according to claim 10, wherein $R^1$, $R^2$, $R^5$, $R^7$, $R^9$ and $R^{10}$ each represent hydrogen;

$R^3$ represents nitro, $-NH\overset{O}{\overset{\|}{C}}NMe_2$, or $-O.CHMe\overset{O}{\overset{\|}{C}}OR^{11}$ where $R^{11}$ represents alkyl of 1-4 carbon atoms;

$R^4$ represents alkoxycarbonyl of 2-7 carbon atoms, or alkoxy of 1-6 carbon atoms;

$R^6$ represents hydrogen, halogen, or nitro; and

$R^8$ represents halogen, alkoxy of 1-6 carbon atoms, or trifluoromethyl.

12. A composition according to claim 11, wherein (a) is bifenox.

13. A composition according to any one of claims 8 - 12 which contains an additional pesticide.

European Patent Office

# EUROPEAN SEARCH REPORT

Application number
EP 78 30 0313

## DOCUMENTS CONSIDERED TO BE RELEVANT

| Category | Citation of document with indication, where appropriate, of relevant passages | Relevant to claim |
|---|---|---|
| | FR - A - 2 206 906 (MOBIL OIL)<br>* Page 7, claims 1 and 4 * | 1-13 |
| A | JP - A - 75 42 030 (TAMURA)<br>& Chemical Abstracts, vol. 83, 173 919y (1975) | 1 |
| A | JP - A - 75 125 030 (SATO)<br>& Chemical Abstracts, vol. 84, 55 318 z (1976) | 1 |

CLASSIFICATION OF THE APPLICATION (Int. Cl.²)

A 01 N 9/02
C 07 C 59/25

TECHNICAL FIELDS SEARCHED (Int.Cl.²)

A 01 N 9/02
A 01 N 9/20
A 01 N 9/24

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 24-11-1978 | DECORTE |

EPO Form 1503.1 06.78